# EUROPEAN PATENT SPECIFICATION

(11) **EP 3 790 000 B1**
(45) Date of publication and mention of the grant of the patent: **18.06.2025**
(21) Application number: 20193372.8
(22) Date of filing: 28.08.2020
(51) Int. Cl.: G10L 15/01, G10L 15/22, G10L 15/18

(54) **SYSTEM AND METHOD FOR DETECTION AND CORRECTION OF A SPEECH QUERY**
SYSTEM UND VERFAHREN ZUR ERKENNUNG UND KORREKTUR EINER SPRACHABFRAGE
SYSTÈME ET PROCÉDÉ DE DÉTECTION ET DE CORRECTION D'UNE INTERROGATION DE LA PAROLE

(30) Priority: 05.09.2019 US 201916561020; 30.10.2019 JP 2019197520
(43) Date of publication of application: 10.03.2021
(73) Proprietor: SoundHound, Inc., Santa Clara, CA 95054 (US)
(72) Inventor: Bettaglio, Olivia, Santa Clara, California 95054 (US); Singh, Pranav, Santa Clara, California 95054 (US)
(74) Representative: Pearl Cohen Zedek Latzer Baratz UK LLP

(56) References cited:
- WO-A1-2018/217194
- US-A1- 2004 024 601
- US-A1- 2018 342 233
- GINA-ANNE LEVOW: "Characterizing and recognizing spoken corrections in human-computer dialogue", COMPUTATIONAL LINGUISTICS, ASSOCIATION FOR COMPUTATIONAL LINGUISTICS, N. EIGHT STREET, STROUDSBURG, PA, 18360 07960-1961 USA, 10 August 1998 (1998-08-10), pages 736 - 742, XP058194798, DOI: 10.3115/980451.980969
- GRIOL DAVID ET AL: "A framework for improving error detection and correction in spoken dialog systems", SOFT COMPUTING, SPRINGER VERLAG, BERLIN, DE, vol. 20, no. 11, 29 July 2016 (2016-07-29), pages 4229 - 4241, XP036070912, ISSN: 1432-7643, [retrieved on 20160729], DOI: 10.1007/S00500-016-2290-Z

## Description

### FIELD

The present disclosure is in the field of systems with speech recognition capability, natural language understanding capability, or both, and more specifically, related to systems and methods for identifying errors by a user's repetition of a similar query.

### BACKGROUND

Conventional systems fail to detect when a question answering system gives a bad answer to a user's query. In particular, automatic speech recognition (ASR) based systems fail to detect errors in the speech recognition. This results in getting transcriptions wrong. Additionally, natural language understanding (NLU) based systems fail to detect errors in query interpretations. Furthermore, even if a system could detect errors, it is impossible to predict a correction for a wrongly transcribed or wrongly interpreted phrase (one or more tokens).

Therefore, what is needed is a system and method for systematically identifying queries that result in incorrect/inaccurate/incomplete transcription by ASR systems and NLU systems, which result in response errors due to missed/incorrect conversion of speech to a transcription or misinterpretation, both of which result in a negative user experience.

US 2004/024601 A1 describes a user interface, and associated techniques, that permit a fast and efficient way of correcting speech recognition errors, or of diminishing their impact. The user may correct mistakes in a natural way, essentially by repeating the information that was incorrectly recognized previously. Such a mechanism closely approximates what human-to-human dialogue would be in similar circumstances. Such a system fully takes advantage of all the information provided by the user, and on its own estimates the quality of the recognition in order to determine the correct sequence of words in the fewest number of steps.

Reference is made to GINA-ANNE LEVOW: "Characterizing and recognizing spoken corrections in human-computer dialogue", COMPUTATIONAL LINGUISTICS, ASSOCIATION FOR COMPUTATIONAL LINGUISTICS, N. EIGHT STREET, STROUDSBURG, PA, 18360 07960-1961 USA, 10 August 1998, pages 736-742.

US 2018/342233 A1 describes a method and apparatus for correcting a speech recognition error based on artificial intelligence, and a storage medium, wherein the method comprises: obtaining a second speech recognition result of a second speech query input by the user; performing error-correcting intention recognition according to the second speech recognition result; extracting error-correcting information from the second speech recognition result when it is determined that the user has an error-correcting intention; screening error-correcting resources according to the error-correcting information, and using a selected best-matched error-correcting resource to perform error correction for the first speech recognition result, the first speech recognition result being a speech recognition result of a first speech query which is input before the second speech query. The solution of the present disclosure may be applied to improve accuracy of error-correcting results and reduce the error-correcting difficulty.

WO 2018/217194 A1 describes methods and systems for correcting, based on subsequent second speech, an error in an input generated from first speech using automatic speech recognition, without an explicit indication in the second speech that a user intended to correct the input with the second speech, include determining that a time difference between when search results in response to the input were displayed and when the second speech was received is less than a threshold time, and based on the determination, correcting the input based on the second speech. The methods and systems also include determining that a difference in acceleration of a user input device, used to input the first speech and second speech, between when the search results in response to the input were displayed and when the second speech was received is less than a threshold acceleration, and based on the determination, correcting the input based on the second speech.

Reference is made to GRIOL DAVID ET AL: "A framework for improving error detection and correction in spoken dialog systems", SOFT COMPUTING, SPRINGER VERLAG, BERLIN, DE, vol. 20, no. 11, 29 July 2016, pages 4229-4241

### SUMMARY

Methods are provided for systematically finding and fixing queries that often result in incorrect ASR system errors due to missed conversion of speech to a transcription or misinterpretation, both of which result in a negative user experience when using a question answering system.

A system for performing the method of claim 1 includes Automatic Speech Recognition (ASR) that performs speech recognition and converts speech to a transcription. The system captures speech audio, performs speech recognition on the segment of speech audio, and performs natural language understanding of the spoken words using techniques such as comparing the words to grammar rules. The system, through a network, communicates with an application.

In accordance with an invention to which the present European patent relates, a method for detecting an inaccurate response to a query according to claim 1 is provided. In accordance with an embodiment, a computer-readable medium comprising a program configured to cause a computer to implement the method according to claim 16 is provided.

Further aspects of the invention are defined by the dependent claims.

There are various advantages of the disclosure. One advantage of the disclosure is a seamless integration of an application with a system having a user interface with which the user is already familiar. Another advantage of the disclosure is the ability to expand the functionality of an application after the application is built or deployed for use by a user. A further advantage of the disclosure includes the ability to interface with an application, through a network, using a variety of input means such as a microphone for a user interface.

### BRIEF DESCRIPTION OF THE DRAWINGS

FIG. 1A shows a speech-enabled device according to various embodiments.
FIG. 1B shows a speech-enabled device according to various embodiments.
FIG. 1C shows a speech-enabled device according to various embodiments.
FIG. 1D shows a speech-enabled device according to various embodiments.
FIG. 2 shows a user interacting with a system that uses natural language to respond to the user according to an embodiment.
FIG. 3 shows a user interacting with a system that uses natural language to respond to the user according to an embodiment.
FIG. 4 shows a process for determining an incorrect response from a system according to an embodiment.
FIG. 5 shows a process for determining an incorrect response from a system with an interruption query according to an embodiment.
FIG. 6 shows a process for determining an incorrect response to a repeated query according to an embodiment.
FIG. 7 shows a process for determining an incorrect response to a repeated query according to an embodiment.
FIG. 8 shows a process for determining a transcription error probability and natural language interpretation error probability using a trained model according to an embodiment.
FIG. 9 shows a rotating disk non-transitory computer readable medium according to an embodiment.
FIG. 10 shows Flash RAM chip non-transitory computer readable medium according to an embodiment.
FIG. 11 shows a packaged system-on-chip according to an embodiment.
FIG. 12 shows a block diagram of a system-on-chip according to an embodiment.
FIG. 13A shows a rack-based server according to an embodiment.
FIG. 13B shows a block diagram of a server according to an embodiment.
FIG. 14 illustrates a virtual assistant system that uses client-server coupling according to an embodiment.

### DETAILED DESCRIPTION

All statements herein reciting principles, aspects, and embodiments as well as specific examples thereof, are intended to encompass both structural and functional equivalents thereof.

It is noted that, as used herein, the singular forms "a," "an" and "the" include plural referents unless the context clearly dictates otherwise. Reference throughout this specification to "one embodiment," "an embodiment," "certain embodiment," or similar language means that a particular aspect, feature, structure, or characteristic described in connection with the embodiment is included in at least one embodiment. Thus, appearances of the phrases "in one embodiment," "in at least one embodiment," "in an embodiment," "in certain embodiments," and similar language throughout this specification may, but do not necessarily, all refer to the same embodiment or similar embodiments.

Embodiments of the disclosure described herein are merely exemplary, and should not be construed as limiting the scope of the invention as it could be appreciated by those of ordinary skill in the art. The disclosure is effectively made or used in any embodiment that comprises any novel aspect described herein. Furthermore, to the extent that the terms "including", "includes", "having", "has", "with", or variants thereof are used in either the detailed description and the claims, such terms are intended to be inclusive in a similar manner to the term "comprising".

A query response system (QRS) receives queries from a user and provides responses to those queries. One embodiment of a QRS is any virtual assistant (or any machine) that assists a user and, in most instances, that the user can control using speech.

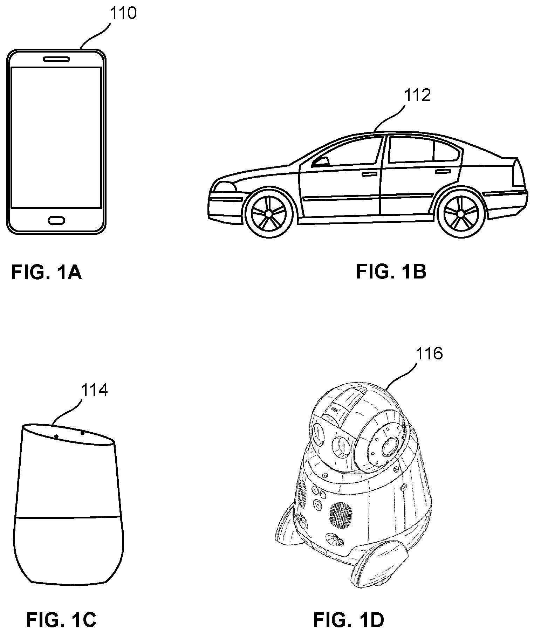

FIGs. 1A, 1B, 1C, and 1D show example embodiments of speech-enabled virtual assistants according to different embodiments. FIG. 1A shows a mobile phone 110. FIG. 1B shows an automobile 112 that includes a speech enabled virtual assistant. FIG. 1C shows a countertop speech enabled device 114, which is capable of playing music in response to a query from the user. FIG. 1D shows a domestic robot or a personal electronic butler 116, which includes a microphone and speaker and the ability to receive queries and commands from the user, provide a response to the queries and commands, and perform actions in response to the queries and commands from the user.

Some embodiments of a virtual assistant are screenless, such as an earpiece that includes a microphone and speaker, and which has no display screen. Some embodiments of a virtual assistant are stationary, such as a vending machine that includes a speaker and a microphone. Some embodiments of a virtual assistant are portable, such as a mobile phone. Some embodiments of a virtual assistant include a manual interface, such as keyboard or touchscreen. Some embodiments of a virtual assistant include neural interfaces that use human thoughts as a form of natural language expression. Some embodiments of a virtual assistant are a home personal assistant device.

In accordance with various aspects, some embodiments function by running software on general-purpose programmable processors. In accordance with some embodiments, which are power-sensitive, and some embodiments, that require especially high performance for neural network algorithms, use hardware optimizations. Some embodiments use application-customizable configurable processors in specialized systems-on-chip, such as ARC processors from Synopsys and Xtensa processors from Cadence. Some embodiments use dedicated hardware blocks burned into field programmable gate arrays (FPGAs). Some embodiments use arrays of graphics processing units (GPUs). Some embodiments use application-specific-integrated-circuits (ASICs) with customized logic to give best performance. Hardware blocks and custom processor instructions, co-processors, and hardware accelerators perform neural network processing or parts of neural network processing algorithms with particularly high performance and power efficiency. This is important for maximizing battery life of battery-powered devices and reducing heat removal costs in data centers that serve many client devices simultaneously.

Referring again to FIG. 1A, one example embodiment of a virtual assistant is a mobile phone running an application that can provide responses to queries or questions. Other examples include a speech-enabled household appliance, a watch, an automobile, a robot that performs laborious tasks, and an implanted bodily enhancement device.

Virtual assistants receive commands from users. In response to commands, virtual assistants perform responsive actions that produce responsive results. In accordance with various embodiments, some virtual assistants include applications that have the ability to store grammar or grammar rules. As used herein "grammar" includes a set of one or more phrasing rules, which may be related to a domain of conversation. Each rule defines a phrasing that indicates or represents a particular meaning and may result in a task being performed by the application. The phrasing is typically in natural language and spoken by a user. The grammar or grammar rule includes functional information that an application recognizes and that acts as control information that the application uses to perform a task or action. The grammar also includes information for execution by the application, the execution of which results in a response from the application. In accordance with another embodiment, a grammar is stored in a remote location and accessed as needed. For example, a grammar rule may support the phrasing "what's the weather," which is natural language, and the grammar rule causes a request to look up the weather report. A grammar "what's the weather in <PLACE NAME>" is a grammar rule that means a request to look up the weather report for whatever PLACE NAME a speaker utters.

An action of a virtual assistant that answers questions is to provide an answer as a result. Users observe/hear the result from the virtual assistant, which is intended to be responsive to the user's commands or query. In accordance with some embodiments, virtual assistants provide the answer result as synthesized speech. In accordance with some embodiments, the response from the virtual assistant may be confirmation of an action to be performed by the virtual assistant.

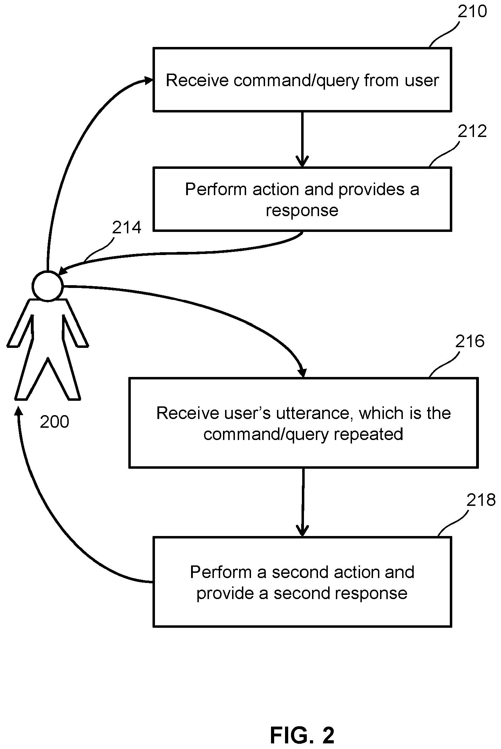

Referring now to FIG. 2, a user 200 is shown. In accordance with various embodiments, the virtual assistant receives speech or text queries from the user, such as audio captured by one or more microphones. The virtual assistant recognizes words using speech recognition. Many methods of speech recognition are known in the art and applicable to the various aspects and embodiments. The user queries (sends a command to) the virtual assistant (or QRS). At 210, the virtual assistant receives the command or query. In accordance with some embodiments, the virtual assistant performs actions and provides responses. At 212, the virtual assistant performs the action, as understood, and provides a response 214 to the user's query based on a transcription and interpretation derived from the query.

Users can feel satisfied with the results from their commands, dissatisfied with the results, or neutral about the results. In accordance with various embodiments, the virtual assistant determines if the response provided to the user is satisfactory. Thus, the virtual assistant attempts to determine if the response was accurate, or responsive, based on the user's reaction. In some instances, the user is not satisfied with the response, either because of transcription error, interpretation error, or lack of expected system capability. When the user is not satisfied, the user may indicate this by using a negative indicator. Negative indicator words are words that, in some context, indicate that a previous action performed by a virtual assistant was unsatisfactory. In particular, the action that the virtual assistant performed is one that did not satisfy its user. For example, the word "no" can be a negative indicator since it is a likely user utterance if a virtual assistant says "the sky is green". The word "stop" can be a negative indicator since it is a likely user utterance if a voice-enabled automobile starts opening its windows when a passenger asks to turn on the heat. Different virtual assistants have different sets of negative indicator words. For example, although the word "stop" is a negative indicator for a car, "stop" is a normal command for a music player. Words, as recognized by speech recognition, are sequences of phonemes available in a dictionary. Transcriptions are sequences of words.

In some instances, when a user is not satisfied with the response, the user will almost immediately provide a second query that is similar, but not identical to the first query. In accordance with some aspects, the user repeats the same query. For example, if a user asks a question and gets a bad answer, then at 216, the user is likely to repeat the question almost immediately in order to get the correct transcription before giving up. At 218, the virtual assistant performs a second action and provides a second response.

In accordance with one aspect, if there is a transcription error, then an example of an exchange between the user and the virtual assistant might be as follows when the user intends the query: Show me the hiking options near Yosemite. The virtual assistant captures the user's spoken query. The transcription results in the virtual assistant transcribing the user's query to be: "Show me the hiking options near unity." The word "unity" is phonetically similar to the user's intended word "Yosemite." A response to this query, which is due to incorrect transcription, from the virtual assistant would be incorrect. As such, the user would most likely almost immediately repeat the query. In some instances, the user may even interrupt the response from the virtual assistant in order to repeat the query. The virtual assistant captures the second user query, which is the same as the first query. This may result in the correct transcription. In accordance with some aspects, another incorrect transcription may result in the virtual assistant understanding the query to be: "Show me the hiking options near and me." Again, a response, which is to the incorrectly transcribed query, from the virtual assistant is incorrect. The process may again be repeated, as the user repeats the original query a third time or even a fourth time. In accordance with some aspects, the user may decide to provide the query in a text or typed format. When the virtual assistant transcribes the query correctly and understand it to be "Show me the hiking options near Yosemite" the response from the virtual assistant will be satisfactory to the user. The virtual assistant can compare the various transcriptions to determine that the transcriptions were incorrect or inaccurate. The virtual assistant can use the information collected to improve responses to future queries. The virtual assistant creates a mapping between the one or more incorrect transcriptions and the final transcription after which the user made no nearly-matching query. This ensures that identical future mistranscriptions will receive a correct interpretation and response. In accordance with some embodiments, the virtual assistant trains or otherwise enhances an acoustic model specific to the user. This improves the accuracy of speech recognition for the user's specific voice attributes and accent. In accordance with some embodiments, the virtual assistant provides information about the apparently incorrect and correct transcriptions to a database for collection and analysis, as outlined below. Recordings of the voice queries with apparent recognition errors may be prioritized for data labelers to transcribe correctly as speech recognition training data likely to provide especially valuable information for machine learning better acoustic models and language models for speech recognition. The examples of incorrect and the corresponding apparently-correct transcriptions are used to automate generation of phrasings in natural language grammars and train statistical natural language models. Such automation reduces the amount of engineering effort needed to develop and improve speech recognition and natural language understanding system for general purpose virtual assistants and for application specific virtual assistants.

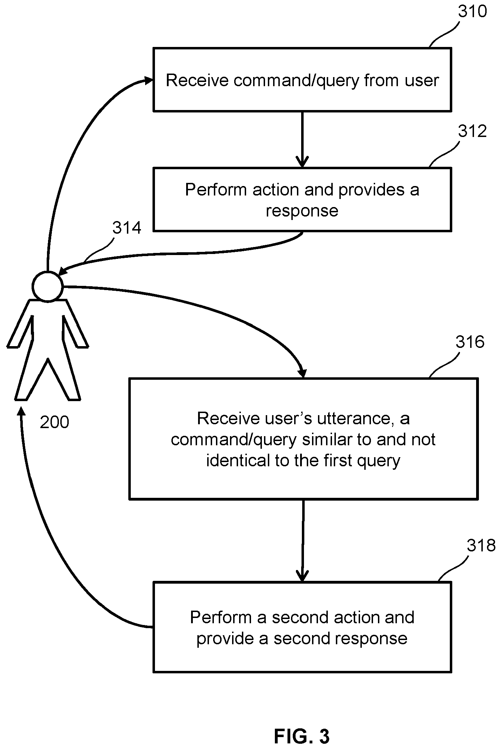

Referring now to FIG 3. the user 200 is shown interacting with the virtual assistant or the QRS. At 310, the virtual assistant receives the command or query. In accordance with some aspects, the virtual assistant can incorrectly interpret the query from the user. At 312, the virtual assistant performs the action, as interpreted, and provides a response 314 to the user's query based on the interpretation of the query. In some instances, the user does not repeat the same query when the virtual assistant provides an incorrect response to the user's query. Instead the user changes the query that is received by the system, at 316. For example, the user may provide the query: "What are the FIFA matches gonna happen today?" The virtual assistant may transcribe the query correctly and provide an inaccurate or incorrect response. The user may then provide the following query: "Show me the list of FIFA matches scheduled for today." At 318, the virtual assistant performs a second action and provides a second query. Another example of a follow-up query may be: "Who is playing in the FIFA today?" The user may follow-up with a general query: "Any FIFA matches today?" Any of the follow-up and different queries can be in response to the virtual assistant (or system) providing an inaccurate response or an incorrect response because of misinterpretations. Even if all transcriptions are correct for the user's successive queries, they are significantly different in length and words used. In other words, they have a large edit distance. However, they all have the same or similar semantic meanings. The failure of the virtual assistant to interpret the first query might be because it lacks a grammar or other appropriate training that supports the phrasing.

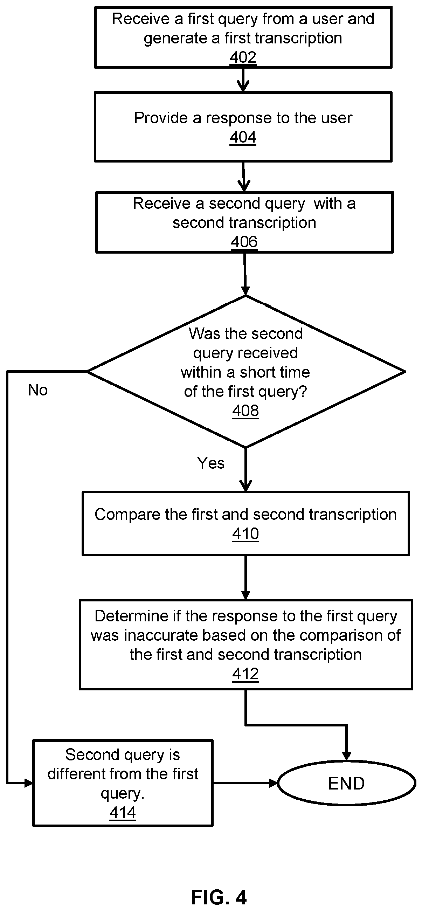

Referring now to FIG. 4, a process is shown for a system that responds to a user's query. At step 402, the system receives a first query for the user. The system generates a first transcription from the first query. At step 404, the system provides a response to the user. If the first transcription was incorrect, then the response will not be satisfactory to the user. At step 406, the user queries the system a second time by providing a second query. The second query results in a second transcription. At step 408, the system determines if the second query was received within a short period of time from the first query. In accordance with one aspect, a short period is within the range of 0-30 seconds after completion of the first query. If so, then at step 410 the system compares the first transcription with the second transcription. At step 412, the system determines if the response to the first query was inaccurate based on comparison of the first transcription and the second transcription. The comparison computes a measure of similarity between the first transcription and the second transcription, as described in detail below. If at step 408 the second query was not within a short period of time from the first query, then at step 414 the system determines that the queries are unrelated and so the second query cannot indicate an error in the first query's transcription.

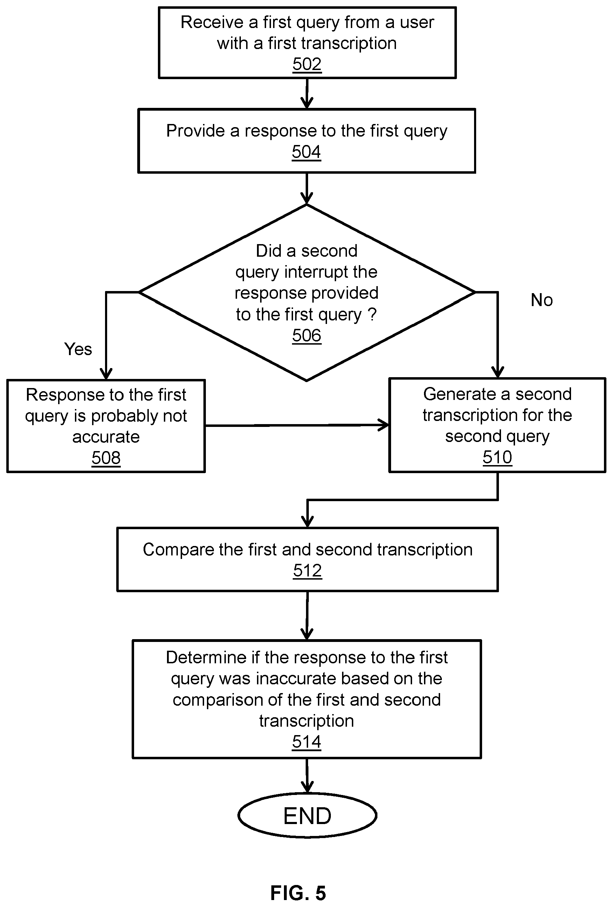

Referring to FIG. 5, a process for determining an incorrect response is shown in accordance with the various aspects. At step 502, the system receives a first query for the user. The system processes the first query and generates a first transcription. At step 504, the system provides to the user a response to the first query based on the first transcription. If the first transcription was incorrect, then the response will not be satisfactory to the user. At step 506, the system determines if the user provided a second query that interrupted or barged-in during the response. If so, then at step 508 the system determines that the response was probably not accurate. Accordingly, the system can mark or tag or designate the first transcription as not being accurate. If at step 506 the second query did not interrupt the response, then at step 510, the system generates a second transcription for the second query. In accordance with one aspect, the second query is identical to the first query. In accordance with one aspect, the second query is similar to, but not identical to, the first query. At step 512, the system compares the first transcription with the second transcription. At step 514, the system determines if the response to the first query was inaccurate based on comparison of the first transcription and the second transcription.

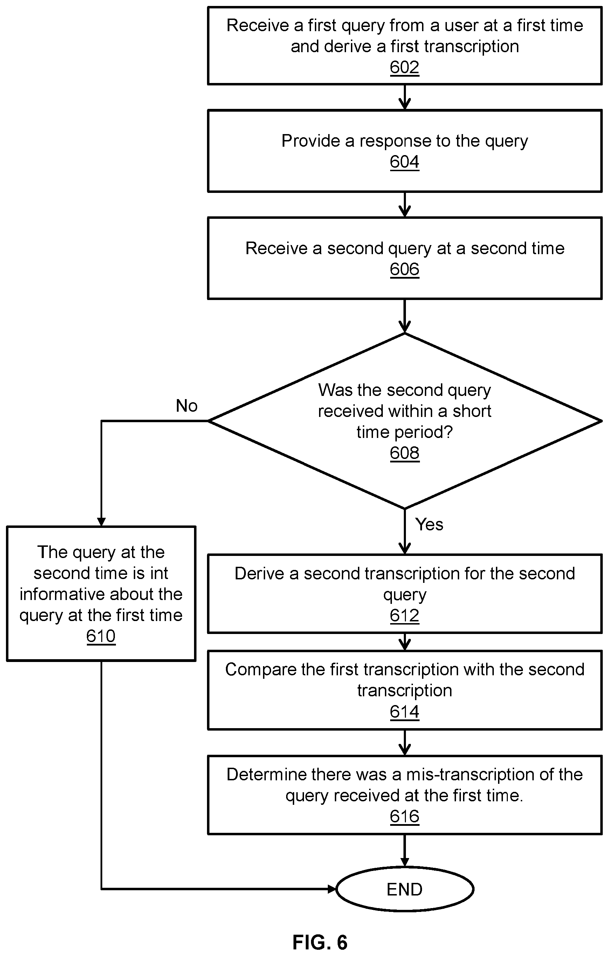

Referring now to FIG. 6, a process for determining an incorrect response is shown in accordance with the various aspects. At step 602, a system receives a first query at a first time and derives a first transcription for the first query. At step 604, the system provides a response to the query based on the first transcription. At step 606, the system receives a second query at a second time. In accordance with some aspects, the second query may be the similar to the first query. In accordance with some aspects, the second query may be identical to the first query. At step 608, the system determines if the second query was received a short period of time after the first query. If the second query was not received a short period of time after the first query, then at step 610 the system can determine that the second query is not useful to indicate the correctness or accuracy of the response to the first query. If at step 608 the system determines that the time span between the query at the first time and the query at the second time is a short duration, which is less than 30 seconds, then at step 612 the system derives a second transcription for the second query. At step 614, the system compares the first transcription with the second transcription. The system compares the similarity between the first and second transcriptions. If the similarity is above a threshold, then the system determines that the queries are similar. The similarity of the queries can be calculated using, for example, edit distance. In light of the queries being presented within a short period of time and the queries being similar, then, at step 616, the system determines that there was a mistranscription of the first query. Thus, the system determines that the response to the query at the first time was an incorrect response and the first transcription was incorrect or a misinterpretation.

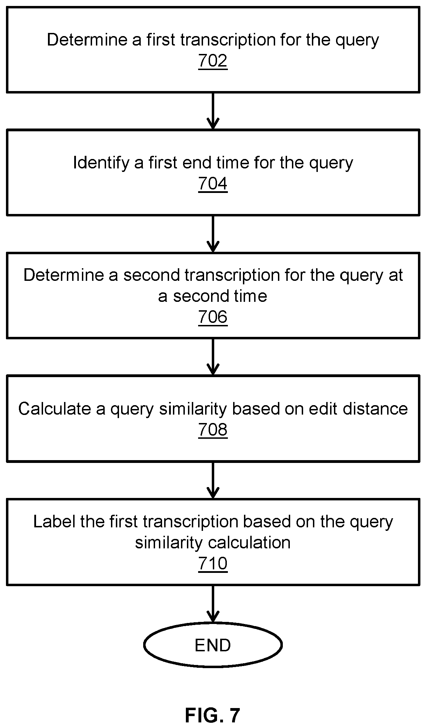

Referring now to FIG. 7, a process is shown for labeling transcriptions. At step 702, a system determines a first transcription for a query. At step 704, a first end time is determined for the query. At step 706, a second transcription is determined for a query at a second time. At step 708, the system calculates a query similarity between the first transcription and the second transcription based on edit distance. The query similarity includes edit distance and timing of the queries, which is based on the first end time of the query and the start time of an immediately following query. If the edit distance is low and the time period between queries is short, for example less than 30 seconds, then the similarity score for the queries would be high, which exceeds a defined threshold value. Based on the threshold value being exceeded, at step 710, the first transcription is labelled or tagged according to the query similarity calculations.

Using the labelled transcription, a model is trained to determine when two queries that are presented in a short period of time are provided by a user due to inaccurate responses generated by the system. This allows the system to detect incorrect transcriptions or interpretations as well as learn to correct the error. Specifically, a first transcription with a similarity score below a lower threshold is labelled as being unrelated to the second transcription. This avoids labelling unrelated queries as mistranscription or misinterpretations. A first transcription with a similarity score above a high threshold is labelled as an incorrect transcription. Since most incorrect transcriptions are only incorrect by one or a small number of words, this recognizes that a second query with only one or a small number of words different from the first query is probably a repetition of the same intended words. A first transcription with a similarity score above the lower threshold and below the higher threshold has a significant number of similar words to the second query but enough differences that the user has probably not intended to repeat the same words. In that case, the first transcription is labeled as a misinterpretation. This has the benefit of labeling queries with likely errors based on the likeliest type of error, which enables human data labelers to prioritize labeling data that will be most likely to improve either speech recognition models or natural language understanding models. It also enables unsupervised learning systems to automate the training of appropriate models without requiring human data labeling or sorting of training data. Furthermore, entity tagging improves the amount of data available and therefore the accuracy of training a system for detection and correction. One reason for this is to detect when differences between transcriptions are due to differences in a specific entity, such as a specific proper noun. For example, "play the Beatles" and "play the Stones", though differing by 1 word, are not likely mistranscriptions. Entity detection that recognizes that, in the context of following the word "play", "the Beatles" and "the Stones" are band names. Entity tagging would replace each transcription with "play <BAND NAME>" and interpret them as identical and therefore, not an error. Another reason for entity tagging is to normalize the number of tokens in the similarity calculation. For example, the city name entity "San Diego" has two words whereas the city name entity "Santiago" has just one word. A distance calculation should count that as a one word edit distance. Conversely, when the city name "New York City" is transcribed correctly, the edit distance calculation for computing a similarity score will count it as a single token and therefore avoid the length of the name increasing the similarity score inappropriately.

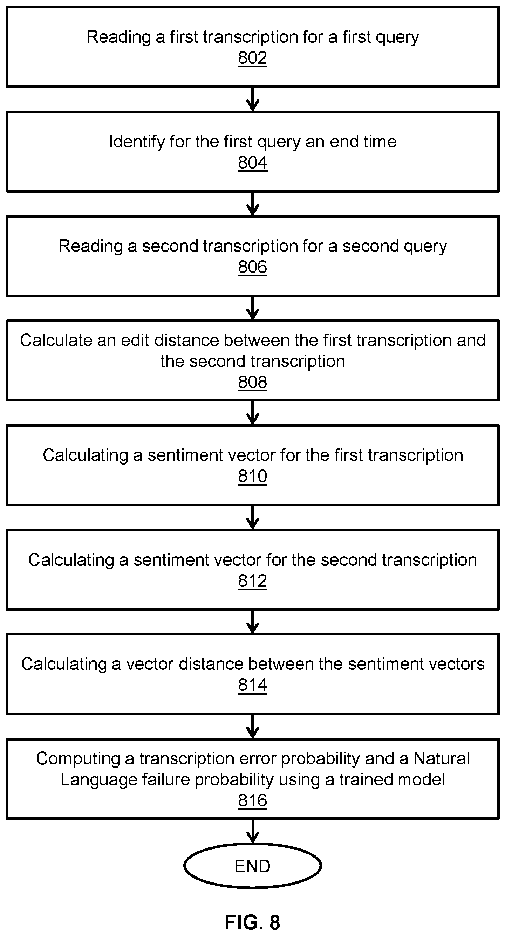

Referring now to FIG. 8, a process is shown for determining a transcription error probability or a natural language misinterpretation probability. At step 802, the system reads or receives a first transcription for a first query. At step 804, a first end time is recorded or identified for the first query. At step 806, a second transcription is read for a second query at a second time. At step 808, the system calculates an edit distance between the first transcription and the second transcription. At step 810, the system calculates a first sentiment vector for the first transcription. At step 812, the system calculates a second sentiment vector for the second transcription. At step 814, the system determines or calculates a vector distance between the first sentiment vector and the second sentiment vector. At step 816, the system computes a transcription error probability and a natural language misinterpretation probability using a trained model. The transcription error probability and the natural language misinterpretation probability, for any query, represent the error profile for that query.

In accordance with the various aspects and embodiments, the QRS system generates an error profile for various queries. The error profiles vary between types of devices (near-field, far-field, or automotive), usage conditions (background noise profiles), user attributes (gender, accent), etc. The error profile includes an error score that is computed. In accordance with some aspects, the error is computed by aggregating any number of error indicators. In accordance with one aspect, aggregating is to use a normalized weighting of error indicators.

In accordance with one aspect, the QRS aggregates for instances when the transcriptions of two or more queries, which are within a short time range, are similar according to a string-matching measure, such as edit distance. In accordance with one aspect, the QRS aggregates when transcriptions are non-identical and the interpretations of two or more queries, within a short time range, are similar, according to a semantic similarity measure. For example, semantic similarity can be based on a distance between embedding vectors. The vector for a transcription can be the sum or the average of the word embedding vectors of the words in the transcription. For example, "How's the weather in Silicon Valley" and "Tell me the temperature in Santa Clara" have close semantic similarity even though they have no words in common.

In accordance with one aspect, the QRS aggregates for queries that are successfully interpreted, when intents are similar; specifically, when the data in the respective interpretation data structures (e.g. JSON representations) indicate a semantic similarity.

In accordance with one aspect, the QRS aggregates when a new query interrupts or barges in during a response, which is from the QRS, to the previous query because this can indicate an error in the QRS's transcription of the previous query. Barge-in can be detected by the QRS or device or client. Barge-in can also be inferred by a server when the inter-query time is less than the length of the response audio.

In accordance with one aspect, the QRS looks for key phrases (e.g. "No" or "not" or "I meant"), which can indicate an error in the response to prior query and, thus, an error in the transcription or interpretation. Some key phrases are stronger indicators of mistranscriptions and some key phrases are stronger indicators of misinterpretations.

In accordance with one aspect, the QRS detects when a text query, following a recent audio query, has a short edit distance with the audio query transcription. The text query provides a high-accuracy correction for the response that was inaccurate or incorrect. This is because users can see and correct the text that they write before submitting it as a query.

In accordance with one aspect, the QRS aggregates when two or more queries with a short phrase edit distance have large prosody deltas or when the second query includes a much stronger emphasis, loudness, tone, or word duration. Also, total query length can indicate an attempt at correction.

In accordance with one aspect, the QRS aggregates when all but a small number of tokens in a query match tokens in a grammar, when there is a low acoustic model score, a language model score, a grammar parse score, etc.

In accordance with one aspect, an error likelihood score is per-query. In accordance with one aspect, an error likelihood score is per token. Using finer granularity is more computationally expensive and provides greater precision, which is useful to identify specifically where a transcription has an error. Thus, the ability of the QRS to perform query error detection helps identify real-time system problems and correct the problems for a better user experience.

In accordance with the various aspects, queries with large error likelihood scores are used to identify queries of interest to improve the design and training of speech models. Thus, a QRS that includes a filtering system, which is using large error likelihood score queries, that detects errors saves a lot of time in providing quality assurance based on query-response data from the field. Furthermore, detected errors can indicate valid pronunciations missing from an ASR phonetic dictionary. The correction process can be used for data analysis, data cleansing, and for real-time query rewrites, all of which can enhance user experience. Furthermore, and in accordance with the aspects, large high-error-likelihood queries can trigger the QRS to initiate a user dialog to seek additional information in order to allow the QRS to automatically correct the error. As noted, text queries from a user, which follows hypothesized erroneously transcribed (or interpreted) speech queries from a user, can provide high-probability corrections prior to providing the response from the QRS.

A system can use a Statistical Language Model (SLM) to replace hypothesized erroneous phrases such as: a full-corpus, full-language SLM; crowd sourced SLM built just from user query data; and a personal SLM built just from single user's query data.

In accordance with some aspects, a music player that responds to "play X", "play Y", "play Z" should not identify them as errors. Though such requests tend to come more than 30 seconds apart and so won't be labelled as errors, one approach is to ignore hypothesized interpretation errors between queries that hit the same domain within a virtual assistant. However, since doing so would miss correcting an "Austin"-"Boston" transcription error, sequential hitting of the same domain should not be used to ignore hypothesized transcription errors.

A replacement phrase can be a weighted combination of the SLM probability score for candidate replacement phrases and phonetic closeness score between the hypothesized erroneous phrase (or its highest scoring phonetic hypothesis before language model rescoring) and candidate replacement phrases.

In accordance with some embodiments, the phonetic comparison can use a master table of tokens with phonetic closeness compiled by analyzing a phonetic dictionary. In accordance with some aspects, the phonetic comparison can use a table manually curated from detected errors. In accordance with some aspects, the system can automatically build a table from automatically detected replacements with high correctness scores.

As noted, acoustic features and prosody can be used to improve accuracy of detection of errors that lead to correction of incorrect transcriptions or inaccurate interpretations. Specifically, acoustic features such as ones that indicate gender, age, accent, and background noise environment can be used to select between or condition acoustic models or language models so as to find a more likely accurate transcription or likely matches between transcriptions with high similarity scores. This allows more accurate real-time recognition, super-real-time analysis of potentially repeated queries, and accurate labeling for non-real-time labelling and training of improved speech recognition and natural language understanding models. Furthermore, prosody is useful to indicate words in a second transcription that were likely recognized incorrectly in a first transcription. A second transcription can be hypothesized as an attempted correction of a first transcription when its overall speech is slower, speech loudness is higher, or some words have particularly strong emphasis. Emphasized words in a second transcription, if identified as different from words at a corresponding location in a first transcription may strengthen a hypothesis that the words in the first transcription were recognized inaccurately. A virtual assistant can use the strengthened hypothesis as an indication to replace the emphasized word(s) and reinterpret the first transcription. The reinterpretation can provide for a correct response. It can also enable correction of the first transcription even if other words in the second transcription are recognized incorrectly.

In accordance with an embodiment, a grammar describes phrasings of utterance or captured speech that are made up of words. As used herein, a "word" is defined relative to any spoken language and can be represented in written form using characters or letter based on any writing system, including an alphabetical writing system. For example, an English spoken word may be represented using an alphabetical writing system. In accordance with another embodiment, a Chinese spoken word may be represented by Chinese characters. In accordance with another embodiment, the word may be spoken in Arabic and the Arabic sounds are represented by alphabetical letters. Any combination of spoken words and visual representation of the spoken word may be used.

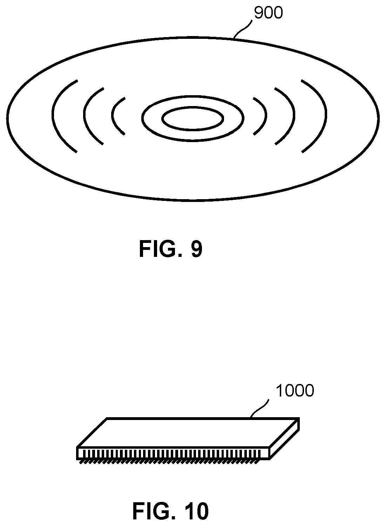

Referring now to FIG. 9, a non-transitory computer readable medium 900 that is a rotating magnetic disk is shown. Data centers commonly use magnetic disks to store code and data for servers. The non-transitory computer readable medium 900 stores code that, if executed by one or more computers, would cause the computer to perform steps of methods described herein. Rotating optical disks and other mechanically moving storage media are possible.

Referring now to FIG. 10, an example non-transitory computer readable medium 1000 that is a Flash random access memory (RAM) chip is shown. Data centers commonly use Flash memory to store code and data for servers. Mobile devices commonly use Flash memory to store code and data for system-on-chip devices. The non-transitory computer readable medium 1000 stores code that, if executed by one or more computers, would cause the computer to perform steps of methods described herein. Other non-moving storage media packaged with leads or solder balls are possible. Any type of computer-readable medium is appropriate for storing code according to various embodiments.

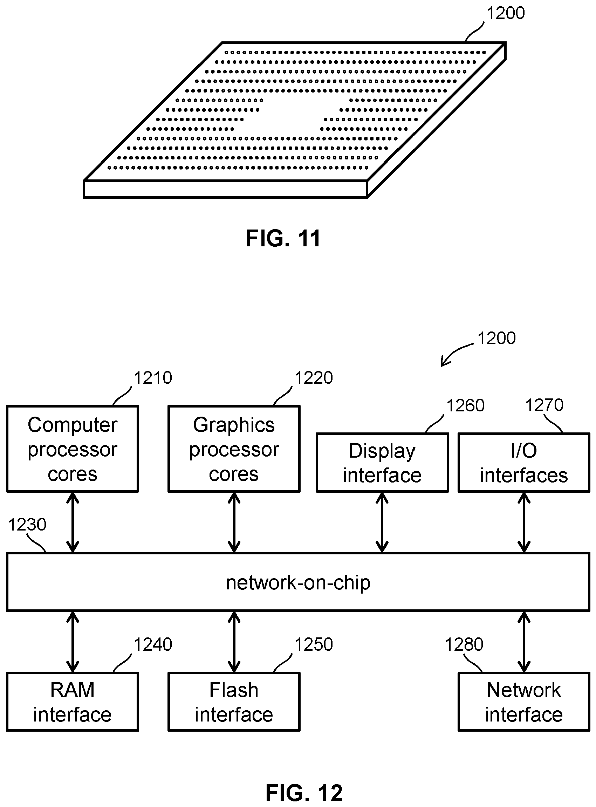

Referring now to FIG. 11, the bottom side of a packaged system-on-chip (SoC) device 1200 with a ball grid array for surface-mount soldering to a printed circuit board. Various package shapes and sizes are possible for various chip implementations. SoC devices control many embedded systems and IoT device embodiments as described herein.

Referring now to FIG. 12, a block diagram of the SoC 1200 of FIG. 11 is shown. The SoC device 1200 comprises a multicore cluster of computer processor (CPU) cores 1210 and a multicore cluster of graphics processor (GPU) cores 1220. The processors 1210 and 1220 connect through a network-on-chip 1230 to an off-chip dynamic random access memory (DRAM) interface 1240 for volatile program and data storage and a Flash interface 1250 for non-volatile storage of computer program code in a Flash RAM non-transitory computer readable medium. The SoC device 1200 also has a display interface 1260 for displaying a GUI and an I/O interface module 1270 for connecting to various I/O interface devices, as needed for different peripheral devices. The I/O interface enables sensors such as touch screen sensors, geolocation receivers, microphones, speakers, Bluetooth peripherals, and USB devices, such as keyboards and mice, among others. The SoC device 1200 also comprises a network interface 1280 to allow the processors 1210 and 1220 to access the Internet through wired or wireless connections such as Wi-Fi, 3G, 4G long-term evolution (LTE), 5G, and other wireless interface standard radios as well as ethernet connection hardware. By executing instructions stored in RAM devices through interface 1240 or Flash devices through interface 1250, the CPUs 1210 and GPUs 1220 perform steps of methods as described herein.

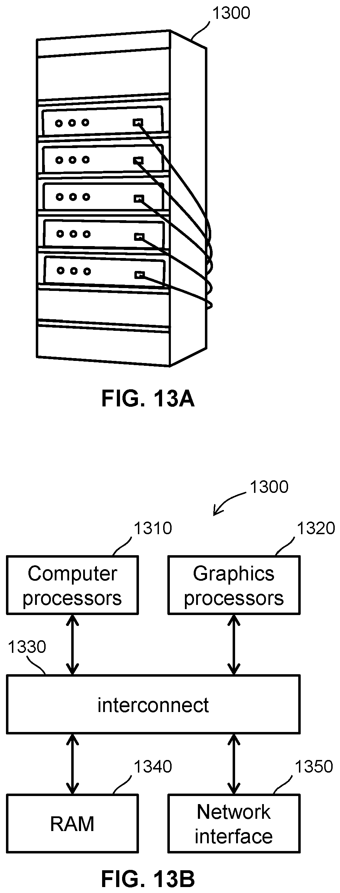

Referring now to FIG. 13A, a rack-mounted server blade multi-processor server system 1300 according to some embodiments is shown. the system 1300 comprises a multiplicity of network-connected computer processors that run software in parallel.

Referring now to FIG. 13B, a block diagram of the server system 1300 of FIG. 13A is shown. The server system 1300 includes a multicore cluster of CPU cores 1310 and a multicore cluster of GPU cores 1320. The processors connect through a board-level interconnect 1330 to random-access memory (RAM) devices 1340 for program code and data storage. Server system 1300 also comprises a network interface 1350 to allow the processors to access the Internet. By executing instructions stored in RAM device 1340, the CPUs 1310 and GPUs 1320 perform steps of methods as described herein.

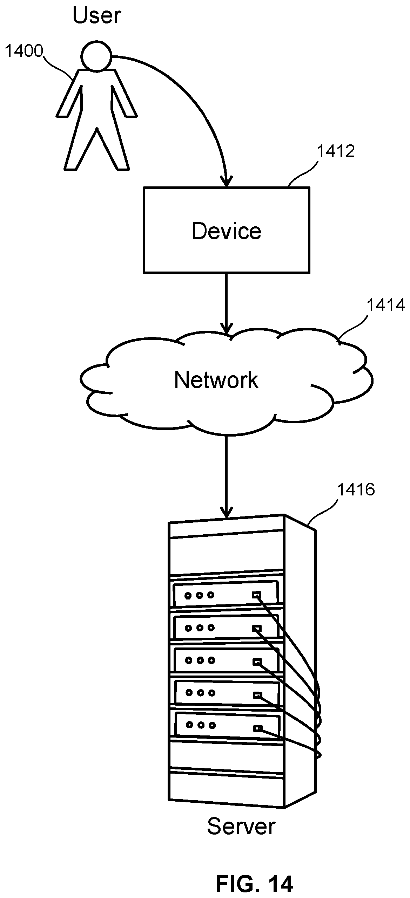

Some embodiments run entirely on a user device. Some embodiments use client-server interaction for reasons such as the server having more processor performance in order to give better quality of results. FIG. 14 shows one such embodiment. A user 1400 speaks audio to a virtual assistant or device 1412, which sends the audio over a network 1414 to a rack-mounted server 1416 in the server farm of a data center. The server 1416 processes the audio and carries out method steps as outline in the various aspects and embodiment. The server 1416 sends the result through network 1414 to device 1412, which provides it to user 1400. In response, user 1400 speaks and the device 1412 receives and sends the captured speech of the user 1400 over network 1414 to server 1416. The server 1416 carries out method steps in accordance with the various aspects.

Modern virtual assistants work by executing software on computer processors. Various embodiments store software for such processors as compiled machine code or interpreted code on non-transitory computer readable media.

Various embodiments use general purpose processors with instruction sets such as the x86 instruction set, graphics processors, embedded processors such as ones in systems-on-chip with instruction sets such as the ARM instruction set, and application-specific processors embedded in field programmable gate array chips.

Various embodiments are methods that use the behavior of either or a combination of humans and machines. The behavior of either or a combination of humans and machines (instructions that, when executed by one or more computers, would cause the one or more computers to perform methods according to the disclosure described and claimed and one or more non-transitory computer readable media arranged to store such instructions) embody methods described and claimed herein. Each of more than one non-transitory computer readable medium needed to practice the disclosure described and claimed herein alone embodies the disclosure. Method embodiments are complete wherever in the world most constituent steps occur. Some embodiments are one or more non-transitory computer readable media arranged to store such instructions for methods described herein. Whatever entity holds non-transitory computer readable media comprising most of the necessary code holds a complete embodiment. Some embodiments are physical devices such as semiconductor chips; hardware description language representations of the logical or functional behavior of such devices; and one or more non-transitory computer readable media arranged to store such hardware description language representations. The term "module" as used herein may refer to one or more circuits, components, registers, processors, software subroutines, or any combination thereof.

Although the disclosure has been shown and described with respect to a certain preferred embodiment or embodiments, it is obvious that equivalent alterations and modifications will occur to others skilled in the art upon the reading and understanding of this specification and the drawings. Practitioners skilled in the art will recognize many modifications and variations. The modifications and variations include any relevant combination of the disclosed features. In particular regard to the various functions performed by the above described components (assemblies, devices, systems, etc.), the terms (including a reference to a "means") used to describe such components are intended to correspond, unless otherwise indicated, to any component which performs the specified function of the described component (i.e., that is functionally equivalent), even though not structurally equivalent to the disclosed structure which performs the function in the herein illustrated exemplary embodiments. In addition, while a particular feature may have been disclosed with respect to only one of several embodiments, such feature may be combined with one or more other features of the other embodiments as may be desired and advantageous for any given or particular application.

Some embodiments of physical machines described and claimed herein are programmable in numerous variables, combinations of which provide essentially an infinite variety of operating behaviors. Some embodiments herein are configured by software tools that provide numerous parameters, combinations of which provide for essentially an infinite variety of physical machine embodiments described and claimed. Methods of using such software tools to configure hardware description language representations embody the disclosure described and claimed. Physical machines can embody machines described and claimed herein, such as: semiconductor chips; hardware description language representations of the logical or functional behavior of machines according to the disclosure described and claimed; and one or more non-transitory computer readable media arranged to store such hardware description language representations.

In accordance with the teachings of the disclosure, a client device, a computer and a computing device are articles of manufacture. Other examples of an article of manufacture include: an electronic component residing on a motherboard, a server, a mainframe computer, or other special purpose computer each having one or more processors (e.g., a Central Processing Unit, a Graphical Processing Unit, or a microprocessor) that is configured to execute a computer readable program code (e.g., an algorithm, hardware, firmware, and/or software) to receive data, transmit data, store data, or perform methods.

An article of manufacture or system, in accordance with an embodiment, is implemented in a variety of ways: with one or more distinct processors or microprocessors, volatile and/or non-volatile memory and peripherals or peripheral controllers; with an integrated microcontroller, which has a processor, local volatile and non-volatile memory, peripherals and input/output pins; discrete logic which implements a fixed version of the article of manufacture or system; and programmable logic which implements a version of the article of manufacture or system which can be reprogrammed either through a local or remote interface. Such logic could implement a control system either in logic or via a set of commands executed by a processor.

Furthermore, all examples and conditional language recited herein are principally intended to aid the reader in understanding the principles and the concepts contributed by the inventors to furthering the art and are to be construed as being without limitation to such specifically recited examples and conditions. Moreover, all statements herein reciting principles, aspects, and embodiments, as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

Practitioners skilled in the art will recognize many modifications and variations. The modifications and variations include any relevant combination of the disclosed features. Descriptions herein reciting principles, aspects, and embodiments encompass both structural and functional equivalents thereof. Elements described herein as "coupled" have an effectual relationship realizable by a direct connection or indirect connection, which uses one or more other intervening elements. Elements described herein as "communicating" or "in communication with" other elements include any form of communication or link. For example, a communication link may be established using a wired connection, 802.11 wireless protocols, near-filed protocols, or RFID.

As used herein the term "application" or "app" includes anything that an end-user purchases and deploys or uses in their home or workplace. An application includes anything that incorporates the ability to communicate, by receiving and sending information, with other applications. An application may be a device, which is an object that can establish a communication link or connection with another system or device. An application may also be an object that is coupled with a device. In accordance with an embodiment, applications include an identification or ID. Examples of different types of ID includes a bar code or a set of numbers or anything that can uniquely identify and distinguish either the specific embodiment of the application or its type from other applications.

The scope of the invention, therefore, is not intended to be limited to the exemplary embodiments shown and described herein. Rather, the scope of present invention is embodied by the appended claims.

## Claims

1. A computer-implemented method for determining an inaccurate response to a speech query, the method comprising:
receiving (602) first audio data comprising a first speech query from a user;
determining a first transcription of the first speech query;
providing (604) a response to the first transcription of the first speech query;
receiving (606) a second query from the user after initiation of the response to the first transcription of the first speech query;
determining (612) a second transcription of the second query;
comparing (614) the second transcription to the first transcription to determine a similarity between the first transcription and the second transcription;
determining (616) whether the first transcription is inaccurate based on the comparing of the second transcription to the first transcription;
labeling the first transcription according to the determined similarity being above or below one or more thresholds, wherein:
if the determined similarity is below a lower threshold, the first transcription is labelled as being unrelated to the second transcription;
if the determined similarity is above a higher threshold, the first transcription is labelled as an incorrect transcription; and
if the determined similarity is above the lower threshold and below the higher threshold, the first transcription is labeled as a misinterpretation; and
training a statistical natural language model using the labeled first transcription.

2. The computer-implemented method of claim 1, wherein determining whether the first transcription is inaccurate comprises determining whether the second query interrupted the response or took place within a predetermined amount of time after the response.

3. The computer-implemented method of claim 1 or 2, wherein comparing includes analyzing the first transcription relative to the second transcription by calculating an edit distance and optionally wherein the edit distance is a phoneme edit distance.

4. The computer-implemented method of any one of claims 1 to 3, wherein the second query is received within thirty (30) seconds of the end time of the first query.

5. The computer-implemented method of any preceding claim, wherein the second transcription is different from the first transcription.

6. The computer-implemented method of claim 5, wherein determining that there is an incorrect transcription further comprises determining that the first transcription of the first query includes sufficient semantic similarity to the second transcription of the second query based on a distance between semantic embedding vectors.

7. The computer-implemented method of claim 5, wherein determining that there is an incorrect transcription further comprises determining that the second query includes a key phrase that indicates the first transcription was wrong.

8. The computer-implemented method of claim 5 wherein determining that there is an incorrect transcription comprises determining that the second transcription is derived from a text query.

9. The computer-implemented method of any preceding claim, further comprising providing a response to the second query.

10. The computer-implemented method of claim 1 further comprising:
the second transcription being non-identical to the first transcription;
calculating (708) the similarity between the first transcription and the second transcription based on an edit distance; and
labeling (710) the first transcription in response to the similarity calculation exceeding a threshold of the one or more thresholds.

11. The computer-implemented method of claim 10 wherein the labeling depends on determining that the second query interrupts the response.

12. The computer-implemented method of claim 10 or 11, wherein the first transcription and the second transcription have high similarity and small edit distance and the first transcription is labelled as an incorrect transcription or wherein the first transcription and the second transcription have high similarity and large edit distance and the first transcription is labelled as an intended transcription.

13. The computer-implemented method of any preceding claim, wherein determining whether the first transcription is inaccurate comprises determining whether the second transcription includes an indicator with respect to at least one word in the second query, and optionally wherein the indicator is at least one of emphasis, loudness, tone, and word duration.

14. The computer-implemented method of any one of claims 10 to 13, further comprising:
in response to the similarity being below a natural language understanding (NLU) threshold, labeling the first query as an NLU misinterpretation.

15. The computer-implemented method of claim 1, comprising:
calculating (810) a first sentiment vector for the first transcription;
calculating (812) a second sentiment vector for the second transcription;
calculating (814) a vector distance between the first sentiment vector and the second sentiment vector; and
computing (816) each of a transcription error probability and a natural language understanding (NLU) misinterpretation probability using trained models,
wherein each probability is related to the vector distance, each probability is inversely related to the edit distance, and the transcription error probability exceeds the NLU misinterpretation probability for large vector distances.

16. A computer-readable medium comprising a program configured to cause a computer to implement the method recited in any preceding claim.

## Patentansprüche

1. Computerimplementiertes Verfahren zum Bestimmen einer unrichtigen Antwort auf eine Sprachabfrage und das Verfhren umfassend wie folgt:
Empfangen (602) erster Audiodaten, die eine erste Sprachabfrage von einem Nutzer umfassen;
Bestimmen einer ersten Transkription der ersten Sprachabfrage;
Bereitstellen (604) einer Antwort auf die erste Transkription der ersten Sprachabfrage;
Empfangen (606) einer zweiten Abfrage von dem Nutzer nach der Initiierung der Antwort auf die erste Transkription der ersten Sprachabfrage;
Bestimmen (612) einer zweiten Transkription der zweiten Abfrage;
Vergleichen (614) der zweiten Transkription mit der ersten Transkription, um eine Ähnlichkeit zwischen der ersten Transkription und der zweiten Transkription zu bestimmen;
Bestimmen (616), ob die erste Transkription basierend auf dem Vergleichen der zweiten Transkription mit der ersten Transkription unrichtig ist;
Kennzeichnen der ersten Transkription gemäß der festgestellten Ähnlichlichkeit, wonach diese überhalb oder unterhalb eines Schwellenwertes oder mehr als eines Schwellenwertes ist; wobei gilt wie folgt:
falls die festgestellte Ähnlichlichkeit unterhalb eines niedrigeren Schwellenwertes ist, wird die erste Transkription als ohne Bezug auf die zweite Transkription gekennzeichnet;
falls die festgestellte Ähnlichlichkeit oberhalb eines höheren Schwellenwertes ist, wird die erste Transkription als eine inkorrekte Transkription gekennzeichnet; und
falls die festgestellte Ähnlichlichkeit oberhalb des niedrigeren Schwellenwertes und unterhalb des höheren Schwellenwertes ist, wird die erste Transkription als eine Fehlinterpretation gekennzeichnet; und
Trainieren eines statistisch-natürlichen Sprachmodells, wobei die gekennzeichnete erste Transkription verwendet wird.

2. Computerimplementiertes Verfahren nach Anspruch 1, wobei Bestimmen, ob die erste Transkription unrichtig ist, Bestimmen, ob die zweite Abfrage die Antwort unterbrach oder innerhalb einer vorbestimmten Zeit nach den Antwort stattfand, umfasst.

3. Computerimplementiertes Verfahren nach Anspruch 1 oder 2, wobei Vergleichen Analysieren der ersten Transkription in Bezug auf die zweite Transkription durch Berechnen eines Bearbeitungsabstands einschließt und wahlweise wobei der Bearbeitungsabstand ein Phonem-Bearbeitungsabstand ist.

4. Computerimplementiertes Verfahren nach einem der Ansprüche 1 bis 3, wobei die zweite Abfrage innerhalb von dreißig (30) Sekunden nach dem zeitlichen Ende der ersten Abfrage empfangen wird.

5. Computerimplementiertes Verfahren nach einem der vorhergehenden Ansprüche, wobei die zweite Transkription von der ersten Transkription verschieden ist.

6. Computerimplementiertes Verfahren nach Anspruch 5, wobei Bestimmen dessen, dass eine inkorrekte Transkription vorliegt, ferner Bestimmen dessen umfasst, dass die erste Transkription der ersten Abfrage ausreichende semantische Ähnlichkeit mit der zweiten Transkription der zweiten Abfrage hat, jeweils basierend auf einem Abstand zwischen semantischen Einbettungsvektoren.

7. Computerimplementiertes Verfahren nach Anspruch 5, wobei Bestimmen dessen, dass eine inkorrekte Transkription vorliegt, ferner Bestimmen dessen umfasst, dass die zweite Abfrage einen Schlüsselsatz einschließt, der anzeigt, dass die erste Transkription falsch war.

8. Computerimplementiertes Verfahren nach Anspruch 5, wobei Bestimmen dessen, dass eine inkorrekte Transkription vorliegt, ferner Bestimmen dessen umfasst, dass die zweite Transkription von einer Textabfrage abgeleitet ist.

9. Computerimplementiertes Verfahren nach einem der vorhergehenden Ansprüche ferner umfassend Bereitstellen einer Antwort auf die zweite Abfrage.

10. Computerimplementiertes Verfahren nach Anspruch 1 ferner umfassend wie folgt:
dass die zweite Transkription nicht identisch mit der ersten Transkription ist;
Berechnen (708) der Ähnlichkeit zwischen der ersten Transkription und der zweiten Transkription, jeweils basierend auf einem Bearbeitungsabstand; und
Kennzeichnen (710) der ersten Transkription als Antwort darauf, wenn die Ähnlichkeitsberechnung einen Schwellenwert des einen Schwellenwertes oder der mehr als einem Schwellenwert überschreitet.

11. Computerimplementiertes Verfahren nach Anspruch 10, wobei das Kennzeichnen vom Bestimmen dessen abhängig ist, dass die zweite Abfrage die Antwort unterbricht,.

12. Computerimplementiertes Verfahren nach Anspruch 10 oder 11, wobei die erste Transkription und die zweite Transkription eine hohe Ähnlichkeit und einen kleinen Bearbeitungsabstand haben und wobei die erste Transkription als eine inkorrekte Transkription gekennzeichnet ist oder wobei die erste Transkription und die zweite Transkription eine hohe Ähnlichkeit und einen großen Bearbeitungsabstand haben und die erste Transkription als eine beabsichtigte Transkription gekennzeichnet ist.

13. Computerimplementiertes Verfahren nach einem der vorhergehenden Ansprüche, wobei Bestimmen dessen, ob die erste Transkription unrichtig ist, Bestimmen dessen, ob die zweite Transkription einen Indikator in Bezug auf mindestens ein Wort in der zweiten Abfrage einschließt, umfasst und wahlweise wobei der Indikator mindestens jeweils eines von Hervorhebung, Lautstärke, Ton und Wortdauer ist.

14. Computerimplementiertes Verfahren nach einem der Ansprüche 10 bis 13 ferner umfassend wie folgt:
als Antwort darauf, wenn die Ähnlichkeit ein Schwellenwert unterhalb eines natürlichen Sprachverstehens (natural language understanding, NLU) ist, Kennzeichnen die erste Abfrage als eine NLU-Fehlinterpretation.

15. Computerimplementiertes Verfahren nach Anspruch 1 umfassend wie folgt:
Berechnen (810) eines ersten Gefühlsvektors für die erste Transkription;
Berechnen (812) eines zweiten Gefühlsvektors für die zweite Transkription;
Berechnen (814) eines Vektorabstands zwischen dem ersten Gefühlsvektor und dem zweiten Gefühlsvektor; und
Computing (816) jeweils jede Wahrscheinlichkeit eines Transkriptionsfehlers und jeweils jede Wahrscheinlichkeit einer NLU-Fehlinterpretation, wobei trainierte Modelle verwendet werden,
wobei jede Wahrscheinlichkeit jeweils auf den Vektorabstand bezogen ist, wobei jede Wahrscheinlichkeit in einem umgekehrten Verhältnis zu dem Bearbeitungsabstand ist und wobei die Transkriptions-Fehlerwahrscheinlichkeit die NLU-Fehlinterpretationssahrscheinlichkeit bei großen Vektorabständen überschreitet.

16. Computerauslesbares Medium umfassend ein Programm, das dazu konfiguriert ist, um einen Computer dazu zu veranlassen, das in einem der vorhergehenden Ansprüche rezitierte Verfahren zu implementieren.

## Revendications

1. Procédé mis en œuvre par ordinateur pour la détermination d'une réponse inexacte à une requête vocale, le procédé comprenant les étapes consistant à :
recevoir (602) de premières données d'audio comprenant une première requête vocale d'un utilisateur ;
déterminer une première transcription de la première requête vocale ;
fournir (604) une réponse à la première transcription de la première requête vocale ;
recevoir (606) une deuxième requête de l'utilisateur après initiation de la réponse à la première transcription de la première requête vocale ;
déterminer (612) une deuxième transcription de la deuxième requête ;
comparer (614) la deuxième transcription à la première transcription pour déterminer une similitude entre la première transcription et la deuxième transcription ;
déterminer (616) si la première transcription est inexacte sur la base de la comparaison de la deuxième transcription à la première transcription ;
étiqueter la première transcription selon si la similitude déterminée est au-dessus ou en dessous d'un ou plusieurs seuils, dans lequel :
si la similitude déterminée est en dessous d'un seuil inférieur, la première transcription est étiquetée comme étant non liée à la deuxième transcription ;
si la similitude déterminée est au-dessus d'un seuil supérieur, la première transcription est étiquetée comme étant une transcription incorrecte ; et
si la similitude déterminée est au-dessus du seuil inférieur et en dessous du seuil supérieur, la première transcription est étiquetée comme une interprétation erronée ; et
former un modèle de langage naturel statistique en utilisant la première transcription étiquetée.

2. Procédé mis en œuvre par ordinateur selon la revendication 1, dans lequel la détermination si la première transcription est inexacte comprend la détermination si la deuxième requête a interrompu la réponse ou a eu lieu dans un intervalle temporel prédéterminé après la réponse.

3. Procédé mis en œuvre par ordinateur selon la revendication 1 ou 2, dans lequel la comparaison comprend l'analyse de la première transcription par rapport à la deuxième transcription en calculant une distance d'édition et éventuellement dans lequel la distance d'édition est une distance d'édition de phonème.

4. Procédé mis en œuvre par ordinateur selon l'une quelconque des revendications 1 à 3, dans lequel la deuxième requête est reçue dans les trente (30) secondes de l'heure de fin de la première requête.

5. Procédé mis en œuvre par ordinateur selon l'une quelconque des revendications précédentes, dans lequel la deuxième transcription est différente de la première transcription.

6. Procédé mis en œuvre par ordinateur selon la revendication 5, dans lequel la détermination qu'il existe une transcription incorrecte comprend en outre la détermination que la première transcription de la première requête inclut une similitude sémantique suffisante à la deuxième transcription de la deuxième requête sur la base d'une distance entre des vecteurs d'intégration sémantique.

7. Procédé mis en œuvre par ordinateur selon la revendication 5, dans lequel détermination qu'il existe une transcription incorrecte comprend en outre la détermination que la deuxième requête inclut une phrase clé qui indique que la première transcription était erronée.

8. Procédé mis en œuvre par ordinateur selon la revendication 5, dans lequel la détermination qu'il existe une transcription incorrecte comprend la détermination que la deuxième transcription est dérivée d'une requête textuelle.

9. Procédé mis en œuvre par ordinateur selon l'une quelconque des revendications précédentes, comprenant en outre ka fourniture d'une réponse à la deuxième requête.

10. Procédé mis en œuvre par ordinateur selon la revendication 1, comprenant en outre :
la deuxième transcription étant non identique à la première transcription ;
calculer (708) la similitude entre la première transcription et la deuxième transcription sur la base d'une distance d'édition ; et
étiqueter (710) la première transcription en réponse au fait que le calcul de similitude dépasse un seuil parmi un ou plusieurs seuils.

11. Procédé mis en œuvre par ordinateur selon la revendication 10, dans lequel l'étiquetage dépend de la détermination que la deuxième requête interrompt la réponse.

12. Procédé mis en œuvre par ordinateur selon la revendication 10 ou 11, dans lequel la première transcription et la deuxième transcription ont une similitude élevée et une petite distance d'édition et la première transcription est étiquetée comme une transcription incorrecte ou dans lequel la première transcription et la deuxième transcription ont une similitude élevée et une grande distance d'édition et la première transcription est étiquetée comme une transcription prévue.

13. Procédé mis en œuvre par ordinateur selon l'une quelconque des revendications précédentes, dans lequel la détermination si la première transcription est inexacte comprend la détermination si la deuxième transcription comprend un indicateur par rapport à au moins un mot dans la deuxième requête, et éventuellement dans lequel l'indicateur est au moins un parmi une emphase, une intensité, un ton et une durée de mot.

14. Procédé mis en œuvre par ordinateur selon l'une quelconque des revendications 10 à 13, comprenant en outre :
en réponse au fait que la similitude est en dessous d'un seuil de compréhension de langage naturel (NLU), étiqueter la première requête comme une mauvaise interprétation de la NLU.

15. Procédé mis en œuvre par ordinateur selon la revendication 1, comprenant les étapes consistant à :
calculer (810) un premier vecteur de sentiment pour la première transcription ;
calculer (812) un deuxième vecteur de sentiment pour la deuxième transcription ;
calculer (814) une distance de vecteur entre le premier vecteur de sentiment et le deuxième vecteur de sentiment ; et
calculer (816) une probabilité d'erreur de transcription et une probabilité de mauvaise interprétation de la compréhension de langage naturel (NLU) en utilisant des modèles formés,
dans lequel chaque probabilité est liée à la distance de vecteur, chaque probabilité est inversement liée à la distance d'édition, et la probabilité d'erreur de transcription dépasse la probabilité de mauvaise interprétation de la NLU pour les grandes distances de vecteur.

16. Support lisible par ordinateur comprenant un programme configuré pour amener un ordinateur à mettre en œuvre le procédé décrit dans l'une quelconque des revendications précédentes.
